# EUROPEAN PATENT APPLICATION

(11) **EP 4 692 378 A1**
(43) Date of publication of application: **11.02.2026**
(21) Application number: 24020257.2
(22) Date of filing: 07.08.2024
(51) Int. Cl.: C21B 13/00, C21B 5/00

(54) **APPARATUS AND METHOD FOR ELECTRICALLY HEATING A GAS AND PROCESS FOR THE DIRECT REDUCTION OF IRON ORE**

(71) Applicant: Selas-Linde GmbH, 82049 Pullach (DE)
(72) Inventor: Lemme, Volkmar, 82049 Pullach (DE)
(74) Representative: Lu, Jing

(57) **Abstract**

An apparatus for electrically heating a gas (3) is proposed, said apparatus comprising heating tubes (220) provided in one or more heating arrangements (200, 300) and a transformer (420), wherein said heating tubes (220) comprise tube sections (221, 222, 223) which are configured to be electrically connected, at a first end thereof, to phases (L1, L2, L3) of a transformed multiphase outlet voltage of said transformer (420), and which are electrically interconnected, at a second end thereof, in order to resistance heat said tube sections (221, 222, 223), wherein said transformer (420) is configured to be connected to an electrical supply voltage provided as an inlet voltage to the transformer (420) and is configured to transform the inlet voltage to said multiphase outlet voltage, and wherein said apparatus is configured to supply said multiphase outlet voltage to the, or each of the, heating arrangements (200, 300) and the heating tubes (220) therein without further transformation. A corresponding method in which the apparatus is used, and a process for the direct reduction of iron ore is also proposed.

## Description

### Field

The present disclosure relates to an apparatus and a method for heating a gas and to a process for the direct reduction of iron ore.

### Background

The direct reduction of iron ore has been used for many years to extract pig iron. For the direct reduction of iron ore, a reduction reactor, which is usually a shaft furnace but can also be designed as a rotary kiln or fluidised bed furnace, is fed with iron ore, which is brought into intensive contact with a hot reducing gas containing the reducing agents hydrogen and carbon monoxide on its way through the reactor. The iron oxides contained in the ore are reduced to iron by hydrogen and carbon monoxide, resulting in an intermediate product consisting largely of metallic iron, known as sponge iron, which is discharged from the reduction reactor for further processing into steel.

The direct reduction of iron ore is, however, only used as one example in which the instrumentalities as proposed herein may be utilized, and the present disclosure is not limited thereto. Further applications are indicated below.

There is a need for improvements with regard to electrically heating certain gases, such as a reducing gas in methods for direct reduction of iron ore, and for corresponding apparatus.

### Summary

Against this background, an apparatus for electrically heating a gas and a corresponding method as well as a process for the direct reduction of iron ore with the features of the independent claims are proposed. Embodiments are subject of the dependent claims and the following description.

The proposed apparatus for electrically heating a gas comprises heating tubes provided in one or more heating arrangements and a transformer, wherein said heating tubes comprise tube sections which are configured to be electrically connected, at a first end thereof, to phases of a transformed multiphase outlet voltage of said transformer, and which are electrically interconnected at a second end thereof in order to resistance heat said tube sections by passing an electric current through said tube sections. One heating tube may particularly comprise two or more tube sections to whose first ends the same phase of the transformed multiphase outlet voltage may be connected, wherein one phase is connected to the two first ends of the two tube sections, and the second ends of which are interconnected at their second ends not with one another but with second ends of tube sections of different heating tubes. That is, the tube sections, in this case, extend in opposite directions with regard to a flow direction of a gas.

In the language used herein, a "tube section" should be understood to refer to a part of a total length of a heating tube. A tube section may particularly comprise a number of reverse bends and essentially straight segments. A heating tube and a tube section thereof do not necessarily be provided as a one-piece tube but do provide a lumen in which a gas to be heated can be passed or stream from one end to the tube or tube section, also referred to as an "inlet" herein, to another end, i.e., an "outlet" of the tube section. The indication "essentially" is used herein in particular to include manufacturing tolerances or inaccuracies. As the skilled person may be aware of such tolerances or inaccuracies, the indication "essentially" may be omitted.

In the proposed apparatus, the heating tubes through which the gas is passed to be heated are used as electrical resistors. While a gas to be heated could generally also be heated by other means, such as burners or resistance wires, heating mats or the like, the proposed apparatus provides a number of advantages. Firstly, as compared to fired heaters, there is the advantage of eliminated carbon dioxide emissions. Secondly, electric heating systems with resistance wires or other types of additional resistance heaters, on the other hand, the lifetime of these wires and the installation costs are the driving factors for total cost of ownership evaluations. Resistance wires are only produced by a limited number of suppliers so far and are very expensive, leading to high invest cost, while lifetime evaluations are strongly depending on operation temperature. At temperatures above 1000°C, which may be required in certain applications of embodiments proposed herein, the expected lifetime starts to decrease exponentially, leading to high cost of operation. The combination of high invest cost and limited lifetime, i.e., cost of operation, results in very high total cost of ownership, in such conventional solutions, and an apparatus according to embodiments disclosed herein overcomes these problems.

In the proposed apparatus and its embodiments, said transformer is configured to be connected or is connected to an electrical supply voltage preferably in the medium voltage range which is provided as an inlet voltage to said transformer, and said transformer is configured to transform said inlet voltage to said multiphase outlet voltage. Furthermore, said apparatus is configured to supply said multiphase outlet voltage to the, or each of the, heating arrangements without further transformation. Advantageously, therefore, there is no need for further high-current transformers which may be costly and can require regular maintenance.

In certain embodiments as proposed herein, said heating tubes are configured such that, for said multiphase outlet voltage, a current flowing through said tube sections is less than 5000 A, in particular less than 4000 A. That is, the heating tubes and their tube sections provide a certain resistance which reduce the current, for said multiphase outlet voltage, to an advantageous value. The currents may in particular be higher than 1000 A, especially higher than 2000 A.

In certain embodiments, at least one of a length, a material, a diameter and a wall thickness of the heating tubes and the tube sections is provided such that an electrical resistance thereof is higher than 0.02 Ω, particularly higher than 0.04 Ω, more particularly higher than 0.05 Ω. This, in combination with the outlet voltage of the transformer supplied to the heating tubes, provides for said currents.

The transformer is, in certain embodiments as disclosed herein, particularly configured to provide said outlet voltage as a three phase voltage at 300 to 500 V, particularly 400 V. The electrical characteristics of the heating tubes or their tube sections, particularly the electrical resistance, is adapted to provide sufficient Joule heating such as to obtain the temperatures and heating duty required for heating the reducing gas. That is, in such an adapted electrical resistance configuration no further high current transformers are required and the outlet voltage of a single transformer may be supplied directly to the heating tubes.

In certain embodiments of the proposed apparatus, each of said heating tubes extends from a gas inlet to a gas outlet and comprises an electrical terminal, said electrical terminal being arranged at a central region of the heating tube between said gas inlet and said gas outlet, wherein said gas inlets of a plurality of said heating tubes are electrically interconnected with a first one of said connection elements and said gas outlets of a plurality of said heating tubes are electrically interconnected with a second one of said connection elements, and wherein said electrical terminals of a plurality of said heating tubes are electrically connected to different ones of said phases of said multiphase voltage. Such an arrangement allows for a particularly effective heating and allows for providing a symmetrical arrangement.

In certain embodiments of the proposed apparatus, said heating tubes are arranged in an enclosure and comprise fourteen essentially straight tube segments that are connected with seven reverse bends arranged in a region close to a floor and six reverse bends in a region close to a roof of said enclosure. The electrical interconnections interconnecting the gas inlets and outlets, as well as the reverse bends arranged close to the roof can be hung, in an operational configuration, to the roof of the enclosure.

The electrical connections may, in embodiments proposed herein, and without limitation, be provided such as disclosed in other publications of the present applicant, such as, e.g., EP 4 117 811 B1 which is incorporated by reference in its entirety as far as permitted in certain jurisdictions. The electrical connections may be provided in the middle of the reverse bend in the region close to the floor. Other arrangements are possible with an even number of essentially straight tubes.

In certain embodiments of the apparatus proposed herein, ten to twenty heating arrangements as described are provided. These may particularly be provided in an essentially identical manner, and thus allow for a modularized construction of the overall apparatus.

In certain embodiments of the proposed apparatus, the, or each of the, heating arrangements includes at least three heating tubes and a number of phases of the multiphase voltages corresponds to the, or a plurality or fractional number of the, heating tubes. In such embodiments, the number of heating tubes can be matched to the available power supply conditions.

In certain embodiments of the proposed apparatus, switching means are provided which are configured to simultaneously connected to and disconnected from said heating tubes from said phases of said multiphase current.

In certain embodiments of the proposed apparatus, there are components provided in the inside of the heating tube which increase the inner surface of the heating tubes and which increase the heat transfer to reduce the difference between required tube metal temperature and gas outlet temperature. The components could be turbulators, helical fins or grooves etc.

A method for heating a gas as proposed herein includes that an apparatus according to any of the preceding claims is provided, that the gas is passed through the heating tubes of the heating arrangement, and that the heating tubes are resistance heated while the gas is passed through the heating tubes of the heating arrangement.

As mentioned above, the method proposed herein in certain embodiments may be used to heat a variety of gases, which may be selected from a reducing gas for a reactor configured for the direct reduction of iron, of a process gas converted in a steam cracker, a process gas converted in a reformer, a process gas converted in reactor for the dehydrogenation of a hydrocarbon, or one or more components thereof. The heating tubes may be essentially empty or they may be filled with a catalyst. A chemical reaction may proceed in the heating tubes such that they, in this case, serve as reaction tubes. A chemical reaction may proceed endothermally or, after having overcome an activation energy by heating, exothermally. Generally, the apparatus proposed herein can be utilized for any applications in which one or more gases are heated to elevated temperatures and optionally reacted, e.g., but not limiting the scope of the present disclosure, to 500 to 1500°C or 800 to 1200°C.

This method can be in particular be part of a process for the direct reduction of iron ore which may include the steps of providing a reducing gas, of electrically heating the reducing gas or a part thereof to provide a heated reducing gas, and of reducing the iron ore using the heated reducing gas or a part thereof to provide reduced iron ore. Said electrically heating the reducing gas or a part thereof is performed by the method proposed herein and its embodiments.

As to further details and advantages of such an apparatus, reference is made to the explanations above in regarding the method proposed herein and its different embodiments. Particularly, such an apparatus may, in embodiments as proposed herein, comprise means adapted to perform a method according to any of the embodiments as discussed herein.

In certain embodiments of the proposed process for the direct reduction of iron ore, said reducing gas and said heated reducing gas comprise at least one of carbon monoxide and/or hydrogen, and these components can be matched to fulfil the needs of the specific reduction conditions. In embodiments of the proposed process, said reducing gas and said heated reducing gas further comprises at least one of carbon dioxide and/or a hydrocarbon, wherein unconverted compounds can be recycled to the step of providing the reducing gas and this step can be adapted accordingly.

In certain embodiments of the proposed process for direct reduction of iron ore, said step of providing a reducing gas includes at least one of catalytically reforming a hydrocarbon and hydrolysing water, i.e., either a well-proven method for producing hydrogen can be used or such a step can be decarbonized by e.g. electrolysis if, e.g., a sufficient amount of electrical energy produced by renewable sources is present.

Further advantages and embodiments of the invention will be apparent from the description and the accompanying drawing.

### Figures

Figure 1 schematically illustrates a method for directly reducing iron ore according to an embodiment disclosed herein.
Figure 2 schematically illustrates an arrangement for heating a gas according to an embodiment disclosed herein.
Figure 3 schematically illustrates an arrangement for heating a gas according to an embodiment disclosed herein.
Figure 4 schematically illustrates electrical details for an arrangement for heating a gas such as illustrated in Figure 3.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

For the direct reduction of iron ore, a process gas heater is required that heats the reduction gas to temperatures above 900°C, preferably to 1000°C or, more generally, and as proposed in embodiments, to temperatures from 800 to 1100°C, particularly from 900 to 1000°C. In conventional plants this heater is fired with a mixture of recycled top gas, i.e., gas recycled from the reduction reactor(s) and natural gas. In order to decarbonize this process electric heating solutions have been developed. For example, a system is available where electric resistance heating wire is suspended in a pressure vessel and the reducing gas passes through this vessel and is heated directly by the heating wires. A direct electric heating system comprising an electric star bridge has been developed by the applicant for use in an electric cracking furnace.

As mentioned before already, in electric heating systems with resistance wires, the lifetime of these wires and the installation cost are the driving factors for total cost of ownership evaluation. The resistance wires are only produced by a few suppliers so far and are very expensive, while lifetime evaluations are strongly depending on operation temperature. At temperatures above 1000°C, the expected lifetime starts to decrease exponentially. The combination of high cost and limited lifetime results in very high total cost of ownership and thus in low profitability.

As recognized by the present inventors, the direct heating principle as applied for the star bridge arrangement mentioned is particularly suitable to reduce the temperature of the heating element or heated structures, which are no longer arranged externally to heating tubes through which the reducing gas passes, improves lifetime and reduces total cost of ownership. Certain adaptations of the coil design proposed in the context of the present disclosure allow to use a conventional 400V, three phase voltage as electricity supply directly to the coil without the use of high current transformers as used conventionally so far.

Direct heating of the reducing gas offers the advantage to allow operation of the heating element at lower temperatures, as the process gas cools the heating element. The required temperature difference between heating element and process gas is lower. Specifically, for an indirect system it is expected to have heating elements operated at 1150°C to achieve tube wall temperatures of 990°C for a process gas outlet of 940°C. If the electric current is, as proposed, directly applied to the tubes, the same 990°C are to be achieved at peak for the process gas outlet of 940°C. As such, one can stay below the critical temperature limit of 1000°C, which extends the expected lifetime, according to embodiments disclosed herein, to approximately ten years compared to two to four years for a conventional solution using a heating wire.

Hereinbelow, the proposed instrumentalities are described in connection with the direct reduction of iron ore, but, as mentioned before, these instrumentalities are equally advantageous in other gas heating applications. The focus on the direct reduction of iron ore are therefore only given as one example.

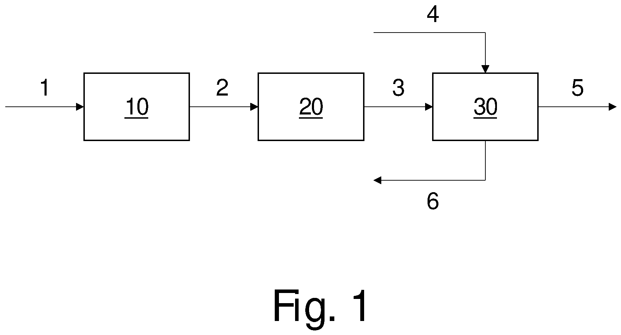

Figure 1 schematically illustrates a method for directly reducing iron ore according to an embodiment disclosed herein.

The method comprises, in the example illustrated, three essential steps, i.e., a step 10 of providing a reducing gas 2, a step 20 of heating said reducing gas 2 to form a heated reducing gas 3, and a step 30 of reducing an iron ore 4 with said heated reducing gas 3 to form reduced iron ore 4, particularly in the form of sponge iron.

It goes without saying that steps 10, 20 and 30 may comprise certain sub steps or that additional steps may be provided, as well as that further media than those indicated or illustrated in Figure 1 may be used, such as steam, and parts or components of certain media may be recycled to, or within, or bypassed around, certain method steps 10, 20, 30 or devices that may be used therein.

An example of such a method, not disclosing the heating instrumentalities as proposed herein, is disclosed in WO 2023/143870 A1 of the present applicant and is particularly described in Figure 1 thereof to which explicit reference is made and which is incorporated by reference herein as far as permitted in certain jurisdictions. Such a method, or a modification thereof, may be the basis of the method proposed herein, but this is not considered a fact limiting the present disclosure.

The step 10 of providing the reducing gas 2 may be supplied with a suitable hydrocarbon feed 1, such as natural gas or a mixture of natural gas and steam, and may also be supplied with, or certain parts of, a recycle stream 6 from the step 30 of reducing iron ore 4, optionally after one or more treatment or separation steps which are not shown in Figure 1 for reasons of conciseness. As to possible treatment steps, all of which may optionally be used in the method shown in Figure 1, reference is again made to the publication of the present applicant just cited.

The step 10 of providing the reducing gas 2 may be performed in any manner conceivable in the art and may, e.g., include using one or more reformer-type reactors including reformer tubes arranged in a combustion chamber. Step 10 may include reforming one or more hydrocarbons of feed 1, such as methane, using a catalyst generally known in the art. The reaction conditions or product spectra can be adjusted on the basis of the composition of feed 1, such as its carbon dioxide content. A crude synthesis gas may be subjected to further steps such as water gas shifting. The heat required for the endothermic reforming process may be supplied via burners, forming a flue gas, but also electrically. Water may be separated from the crude synthesis gas, and the crude synthesis gas may be combined with further gas streams.

Additionally or alternatively, the step 10 of providing the reducing gas 2 may be, or include, one or more steps in which components such as carbon monoxide and hydrogen are supplied without the formation of carbon dioxide, e.g., by electrochemical decomposition of water and/or methane pyrolysis.

The reduction gas 2, in which hydrogen and carbon monoxide are present in a defined ratio, is heated in step 20 before it is supplied to step 30 to a temperature in a suitable range, as indicated above, using the instrumentalities as proposed herein.

The step 30 of reducing iron ore 4 may be implemented using a shaft furnace, or any other type of furnace known in the field of direct iron ore reduction which is charged with iron ore 4. Iron ore 4 is, in step 30, brought into intensive contact with the heated reducing gas 3, whereby the iron oxides present in the iron ore 4 are reduced by hydrogen and carbon monoxide to metallic iron, which is obtained in the form of reduced iron or 5, particularly in the form of sponge iron.

While hydrogen of the heated reducing gas 3 is oxidised to water and carbon monoxide to carbon dioxide in step 30 of reducing iron ore 4, the vast majority of methane contained in the reducing gas 13, as the case may be, which acts only weakly as a reducing agent, remains unchanged, so that a reduction off gas containing water, carbon dioxide and optionally methane and consisting to a large extent of unconverted hydrogen and carbon monoxide is withdrawn from step 30 of reducing iron ore 4. In order to be able to utilise these components, these may be recycled, optionally after further treatment steps, in the form of recycle stream 6.

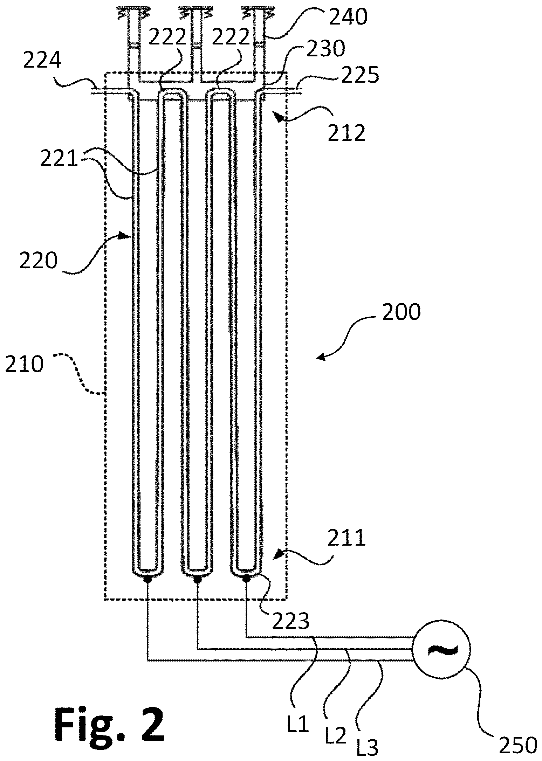

Figure 2 schematically illustrates a heating arrangement 200 that may be used, according to certain embodiments proposed herein, to heat a gas, e.g., a reducing gas in a method illustrated in Figure 1 but, in different embodiments, any other gas, such as in an application mentioned above.

The arrangement 200 shown in Figure 2 at least partly resembles an arrangement used for steam cracking in a method, e.g., disclosed in EP 3 862 076 A1 of the present applicant. The arrangement 200 shown in Figure 2, and also the arrangements shown in the subsequent Figures, may contain certain elements in plurality of which like elements are not always indicated by reference numerals.

Arrangement 200 comprises an enclosure 210, in particular a thermally insulated housing, and a heating tube 220, wherein a number of essentially straight tube segments of heating tube 220, designated 221 in only two cases, each extend between a first zone 211 and a second zone 212 in the enclosure 210. Any other configuration of heating or reaction tubes 220 can be used in the context of the present disclosure and such heating or reaction tubes can be resistance heated in any suitable manner. Examples of such tubes, which also may comprise branchings, are, e.g., described in the article "Ethylene" in Ullmann's Encyclopedia of Industrial Chemistry. Corresponding reaction tubes are designated, for example, SC-1, SC-2, SC-4, USC-U, Super U, USC-W, FFS, GK-1, GK-6, SMK, Pyrocrack 1-1, Pyrocrack 2-2 or Pyrocrack 4-2.

Tube sections of the heating tube 220 which each comprise, in the embodiment illustrated in Figure 2, two of the essentially straight segments 221 and a reverse bend 223 connecting these segments 221, electrically connected to one another in the second region 212 by means of a connecting element 230, also referred to as "star bridge", which may be arranged inside the enclosure 210. A neutral conductor may also be connected thereto, but is not shown for reasons of conciseness. Specifically, further reverse bends 222 connecting the sections 221 of the heating tube 220 may be formed in said connecting element 230. At their opposite ends, i.e., in first region 211, the segments 221 of the heating tube 220, or more specifically the reverse bends 223, may each be electrically connected to the phase connections L1, L2, L3 or conductors of a multi-phase alternating current source 250 which is a transformed voltage of a transformer. The connecting element 230 may be hung to a roof of the enclosure 210 or to a support structure by suspension elements 240.

In the arrangement 200 illustrated in Figure 2, there are thus several tube sections formed by essentially straight segments 221 and reverse bends 223 of a heating tube 220 (although several such heating tubes 220 may be provided), which are arranged next to one another in the enclosure 210. The tube segments 221 merge into one another via reverse bends 222, 223 (only partially labelled) and are connected to an inlet port 224 and an outlet port 225.

Possible materials for the heating tubes 220 and also for the connecting element 230 are, for example, highly alloyed chrome-nickel steels, such as are also used in fired furnaces for steam cracking. Advantageously, these are alloys with high oxidation or scale resistance and high carburizing resistance.

For example, such materials may be, or include, an alloy with 0.1 to 0.5 wt % carbon, 20 to 50 wt % chromium, 20 to 80 wt % nickel, 0 to 2 wt % niobium, 0 to 3 wt % silicon, 0 to 5 wt % tungsten and 0 to 1 wt % other components, wherein the constituents complement each other to form the non-ferrous fraction. A corresponding alloy may also, for example, contain 20 to 40 wt % chromium, to 50 wt % nickel, 0 to 10 wt % silicon, 0 to 10 wt % aluminium and 0 to 4 wt % niobium.

As specific examples, materials with the standard designations GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28 W, G-NiCrCoW, GX45NiCrSiNb45-35, GX13NiCrNb45-35, GX13NiCrNb37-25, or GX55NiCrWZr33-30-04, according to DIN EN 10027 Part 1, "Materials", may be used. These have proven to be particularly suitable for high-temperature use.

In a further embodiment, the connecting element can be thermally insulated from the hot environment in order to reduce thermal stress resulting from steep temperature gradients. For example, a radiation protection shield arranged within the reactor vessel can be provided, which shields the region of the connecting element from an excessive heat input from the region of the tube sections.

In certain embodiments, a part of the connecting element 230 may consist of, or comprise, the material of the heating tubes 220 and a part (or further parts) of the connecting element 230 may consist of a material having a higher specific electrical conductivity. In this case, a solid metal-to-metal connection (e.g., a weld seam) is not necessarily provided. The electrical contact can also be ensured by a different thermal expansion. For example, a casting consisting of one of the previously specified materials could be inserted into a matching molybdenum U-profile.

In all cases, by forming the connecting element 230 from as few individual parts as possible, the number of metal-to-metal connections (e.g., welded or soldered connections) can be reduced or even completely dispensed with. Mechanical stability and reliability can thereby be increased. In certain embodiments, the connecting element 230 can be implemented as a single casting, or parts of the heating tubes 220 can be cast into the connecting element 230 and/or parts of the heating tubes 220 can be formed as an integral component of a corresponding casting.

For further details as to the material of the heating tubes 220 and to the connection elements 230 as well as for details as to their connection with each other, reference is made to US 2023/302426 A1, which is incorporated herein in its entirety as far as permitted by certain jurisdictions.

To supply the electrical current to the heating tubes, suitable terminals may be provided, such as described in US 2023/115461 A1 which is incorporated herein in its entirety as far as permitted by certain jurisdictions. These may particularly be, or comprise, rod-shaped sections which pass during operation in a longitudinally movable manner through wall passages of a wall of the enclosure 210.

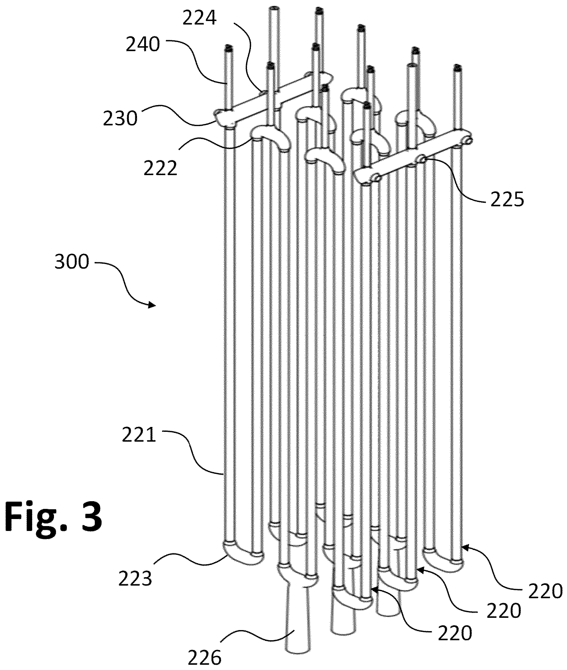

In Figure 3, a heating arrangement 300 according to a further embodiment as proposed herein is disclosed. Elements that already have been described in connection with Figure 2 are indicated with like reference numerals and are not explained again for reasons of conciseness only. Arrangement 300 is an alternative to arrangement 200 in which three heating tubes 220 are provided in a fluidically unconnected manner and at least partially side by side.

In the arrangement 300 shown in Figure 3, three heating tubes 220 are provided, an inlet 224 to each of which is provided in one of the connecting elements 230 and an outlet 225 of which is provided in a further one of the connecting elements 230. Reverse bends 222, 223 are likewise provided, which connect essentially straight segments 221. In the example illustrated, three different heating tubes are present, but in contrast to the arrangement 200 shown in Figure 2, different heating tubes 220 and not sections of the same heating tube 220 are interconnected with a connecting element 230. Interconnecting elements 230 as well as reverse bends 222 are hung, with suspension elements 240, to a roof of an enclosure not shown here for reasons of conciseness.

Each of the heating tubes 220 may be connected in its central region to one phase of a multiphase voltage, such as shown in Figure 2 with L1, L2, L3, using an electrical terminal 226, respectively, and interconnecting elements 230 may be connected to a neutral connector. More specifically, in the arrangement shown in Figure 3, each of said heating tubes 220 extends from a gas inlet 224 to a gas outlet 225, for a gas to be heated, such a reduction gas 3, and comprises said electrical terminal 226 in a central region. Particularly, the "central region" may, e.g., extend between 40 and 60% of a total length of the respective heating tube 220.

The inlets 224 of a plurality of said heating tubes 220 are electrically interconnected with a first one of said connection elements 230 and said outlets 225 of a plurality of said heating tubes 220 are electrically interconnected with a second one of said connection elements 230, while the electrical terminals 226 in the central region of the heating tubes of a plurality of said heating tubes 220 are electrically connected to different ones of said phases L1, L2, L3 of said multiphase voltage.

Specifically, in the arrangement shown in Figure 3, said heating tubes 220 each comprise a first essentially straight tube segment 221, a second essentially straight tube segment 221, a third essentially straight tube segment 221, a fourth essentially straight tube segment 221, a fifth essentially straight tube segment 221 and a sixth essentially straight tube segment 221, said tube segments 221 being arranged essentially in parallel. Said gas inlet 224 is connected to a first end of said first essentially straight tube segment 221, a second end of said first essentially straight tube segment 221 is connected to a first reverse bend 223, said first reverse bend 223 is connected to a first end of said second essentially straight tube segment 221, a second end of said second essentially straight tube segment 221 is connected to a second reverse bend 222, said second reverse bend 222 is connected to a first end of said third essentially straight tube segment 221, a second end of said third essentially straight tube segment 221 is connected to a third reverse bend 223, said third reverse bend 223 is connected to a first end of said fourth essentially straight tube segment 221, a second end of said fourth essentially straight tube segment 221 is connected to a fourth reverse bend 222, said fourth reverse bend 222 is connected to a first end of said fifth essentially straight tube segment 221, a second end of said fifth essentially straight tube segment 221 is connected to a fifth reverse bend 223, said fifth reverse bend 223 is connected to a first end of said sixth essentially straight tube segment 221, and a second end of said sixth essentially straight tube segment 221 is connected to said gas outlet 225. Said electrical terminals 226 are connected to, or formed as a part of, said third reverse bend 223.

In the language used herein, the first, second and third essentially straight tube segments 221 and the first and second reverse bends 223, 222 form a tube section and the fourth, fifth and sixth essentially straight tube segments 221 and the fourth and fifth reverse bend 223, 222 form a further tube section.

Other configurations according to further embodiments may include that described before wherein said heating tubes 220 comprise fourteen essentially straight tube segments 221 that are connected with seven reverse bends 223 arranged in a region close to a floor and six reverse bends 222 in a region close to a roof of said enclosure. The electrical interconnections 230 interconnecting the gas inlets and outlets, as well as the reverse bends 222 arranged close to the roof can be hung, in an operational configuration, to the roof of the enclosure 210.

In this configuration, seven of the fourteen essentially straight tube segments 221 and their connecting reverse bends 222, 223 between the gas inlet 224 and the electrical terminal 226 form one tube section and the other seven of the fourteen essentially straight tube segments 221 and their connecting reverse bends 222, 223 form a further tube section. Any other meaningful configurations are possible.

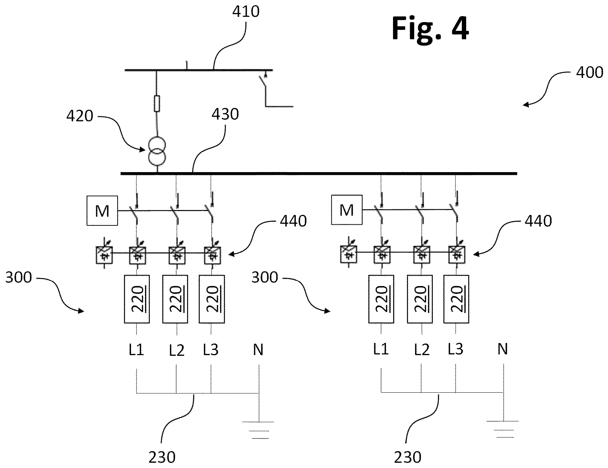

Figure 4 schematically illustrates electrical details for an arrangement for heating a reduction gas such as illustrated in Figure 3.

For example, but not limiting the present disclosure, a total of ten to twenty heating arrangements or "boxes", each configured, e.g., like the heating arrangement 300 shown in Figure 3 may be provided. Each heating tube may, e.g., be a tube of 50 to 80, in particular of 70 to 80 mm diameter and 5 to 10 mm wall thickness. In each heating arrangement, 3 heating tubes may be arranged, as shown in Figure 3, and each of the heating tubes may comprise a length of 50 to 150 m in total arranged with several reverse bends 222, 223 as shown before. Resistances and electrical parameters may be derived by the skilled person as needed.

As shown in the diagram 400 of Figure 4, a main supply line 410 of any type may be used to supply electrical power to the heating arrangements 300, of which electrical details are shown in the lower part of Figure 4. For reasons of conciseness, and to avoid unnecessary repetition, only two heating arrangements 300 are shown but the invention is not limited thereby. Main supply line 410 may, in an example, carry an electrical voltage of 33 kV.

An electric transformer 420 such as a 6 MVA transformer transforming said 33 kV to a three-phase voltage of 400 V is connected to main supply line 410 and this voltage is distributed therefrom, using a distribution line 430, to the heating arrangements 300. A switching arrangement, driven by a motor M and not specifically labelled as being shown with common symbols, is used to connect the heating tubes 220 corresponding to the phase connectors L1, L2, L3. An interconnector connects these heating tubes 220 to a ground terminal or neutral connector N. As can be seen from Figure 4, no individual high current transformers are required. Individual drivers 440 are also not required, as indicated by a strike-through line.

## Claims

1. An apparatus for electrically heating a gas (3), said apparatus comprising heating tubes (220) provided in one or more heating arrangements (200, 300) and a transformer (420),
wherein said heating tubes (220) comprise tube sections (221, 222, 223) which are configured to be electrically connected, at a first end thereof, to phases (L1, L2, L3) of a transformed multiphase outlet voltage of said transformer (420), and which are electrically interconnected, at a second end thereof, in order to resistance heat said tube sections (221, 222, 223),
wherein said transformer (420) is configured to be connected to an electrical supply voltage provided as an inlet voltage to the transformer (420) and is configured to transform the inlet voltage to said multiphase outlet voltage, and
wherein said apparatus is configured to supply said multiphase outlet voltage to the, or each of the, heating arrangements (200, 300) and the heating tubes (220) therein without further transformation.

2. The apparatus according to claim 1,
wherein said heating tubes (220) are configured such that, for said multiphase outlet voltage, a current flowing through said tube sections (221, 222, 223) is less than 5000 A, in particular less than 4000 A.

3. The apparatus according to claim 2,
wherein at least one of a length, a material, a diameter and a wall thickness of the heating tubes (220) and the tube sections (221, 222, 223) is provided such that an electrical resistance thereof is higher than 0.02 Ω, particularly higher than 0.04 Ω, more particularly higher than 0.05 Ω.

4. The apparatus according to any of the preceding claims,
wherein said transformer (420) is configured to provide said outlet voltage as a three phase voltage at 300 to 500 V.

5. The apparatus according to any of the preceding claims,
wherein each of said heating tubes (220) extends from a gas inlet (224) to a gas outlet (225) for the gas (3) to be heated and comprises an electrical terminal (226), said electrical terminal (226) being arranged at a central region of the heating tube (220) between said gas inlet (224) and said gas outlet (225),
wherein said gas inlets (224) of a plurality of said heating tubes (220) are electrically interconnected with a first one of said connection elements (230) and said gas outlets (225) of a plurality of said heating tubes (220) are electrically interconnected with a second one of said connection elements (230), and
wherein said electrical terminals (226) of a plurality of said heating tubes (220) are electrically connected to different ones of said phases (L1, L2, L3) of said multiphase voltage.

6. The apparatus according to any of the preceding claims,
wherein said tube sections (221, 222, 223) comprise essentially straight tube segments (221) connected by reverse bends (222, 223).

7. The apparatus according to claim 6,
wherein said heating tubes (220) are arranged in an enclosure (210) and comprise fourteen of the essentially straight tube segments (221) that are connected with seven reverse bends (223) arranged in a region close to a floor and six reverse bends (222) in a region close to a roof of said enclosure (210).

8. The apparatus according to any of the preceding claims,
wherein ten to twenty heating arrangements (200, 300) are provided.

9. The apparatus according to any of the preceding claims,
wherein the, or each of the, heating arrangements (200, 300) includes at least three heating tubes (210) and a number of phases of the multiphase voltages corresponds to the, or a plurality or fractional number of the, heating tubes.

10. The apparatus according to any of the preceding claims,
wherein switching means are provided which are configured to simultaneously connect said phases (L1, L2, L3) of said multiphase current to and disconnected them from said heating tubes (210).

11. The apparatus according to any of the preceding claims, wherein component is provided inside the heating tubes (220) which increase inner surface of the heating tubes and which increase the heat transfer.

12. A method for heating a gas,
wherein an apparatus according to any of the preceding claims is provided,
wherein the gas is passed through the heating tubes (220) of the heating arrangement (200, 300), and
wherein the heating tubes are resistance heated while the gas is passed through the heating tubes (220) of the heating arrangement (200, 300).

13. The method according to claim 11,
wherein said gas (3) is selected from a reducing gas for a reactor configured for the direct reduction of iron ore, of a process gas converted in a steam cracker, a process gas converted in a reformer, or one or more components thereof.

14. A process for the direct reduction of iron ore including the steps of:
providing a reducing gas;
electrically heating the reducing gas or a part thereof to provide a heated reducing gas using an apparatus according to any of claims 1 to 10 and/or a method according to claim 11 or 12; and
reducing the iron ore using the heated reducing gas or a part thereof to provide reduced iron ore.
